# EUROPEAN PATENT SPECIFICATION

(11) **EP 2 211 306 B1**
(45) Date of publication and mention of the grant of the patent: **26.07.2017**
(21) Application number: 10151353.9
(22) Date of filing: 22.01.2010
(51) Int. Cl.: G06T 7/20

(54) **Imaging apparatus, subject tracking method and storage medium**
Abbildungsvorrichtung, Gegenstandsverfolgungsverfahren und Speichermedium
Appareil d'imagerie, support de suivi d'un sujet et support de stockage

(30) Priority: 23.01.2009 JP 2009013439
(43) Date of publication of application: 28.07.2010
(73) Proprietor: Casio Computer Co., Ltd., Tokyo 151-8543 (JP)
(72) Inventor: Matsumoto, Kosuke, Hamura-shi Tokyo 205-8555 (JP)
(74) Representative: Grünecker Patent- und Rechtsanwälte PartG mbB

(56) References cited:
- EP-A1- 1 988 505
- US-A1- 2003 035 051
- US-A1- 2004 125 984
- US-A1- 2006 088 191
- US-A1- 2008 037 869

## Description

This application relates generally to an imaging apparatus, a subject tracking method and a storage medium on which programs are recorded.

Imaging apparatuses equipped with a function that successively detects the position of a moving subject have been known from before. For example, there is technology that tracks a subject using template matching (also called block matching). For example, the image monitoring apparatus disclosed in Patent Literature 1 (Unexamined Japanese Patent Application KOKAI Publication No. 2001-076156) searches for a small image region resembling a template cut from an image of a previous frame (an image containing the subject that is to be tracked) from the search range of this frame image. Through this search, the image monitoring apparatus detects small image regions with the greatest similarity to the template and then determines that the subject has moved within the detected small image region. In addition, when the frame image is captured anew, this image monitoring apparatus repeats the above actions after renewing the detected small image region as the template. By repeating this, the image monitoring apparatus successively detects (tracks) to what position the subject has moved relative to each frame image successively captured.

However, the image monitoring apparatus disclosed in Patent Literature I accomplishes block matching using the same search conditions regardless of the behavior of the subject. Consequently, the art disclosed in Patent Literature 1 has the problem that, for example, block matching suitable for the behavior of the subject in the frame image cannot be accomplished.

Specifically, in this art there is a problem of unnecessary calculation amounts increasing when there is a wide angle of view such as in wide-angle imaging, and when there is virtually no movement of the subject. In addition, in this art when there are narrow angle of views such as in telephoto imaging while movement of the subject is severe, there is a high likelihood that the subject will deviate from the search range, creating the problem that the subject cannot be tracked.
US 2004/125984 A1 relates to object tracking based on detection of the difference area between two successive images. Based on the detection of the difference area, the position of an object is determined. The detected object position is used for further object tracking.
US 2003/0035051 A1 relates to object tracking within a plurality of frames in a video sequence. First, the area containing motion is detected and a tracking window is located accordingly. The tracking window is updated for each frame based on the current motion detection.
US 2006/0088191 A1 relates to object detection in an image sequence taken by a camera. In particular, global (camera) motion estimation and foreground (object) motion analysis is performed by means of flow-analysis based camera motion estimation and extraction of objects. Object tracking may be performed using a color histogram.
EP 1 988 505 A1 relates to tracking a moving object in a sequence of images. A motion field is first detected for blocks of the image, and the blocks which move in the same direction are grouped to form the moving object. The object is then tracked within other images of the sequence.
US 2008/0037869 A1 relates to determining motion in a sequence of images. Stationary background is first identified and the input images are segmented into different regions based on differences between these images. For each of the regions segmented, local motion is estimated and it is determined which of the regions include moving or static content.

The present invention addresses the above problem and seeks to attain an imaging apparatus, a subject tracking method and a storage program that can accomplish subject tracking suited to the subject's behavior without being influenced by the angle of view.
This is achieved by the features of the independent claims.

With the present invention, it is possible to track a subject more ideally than in the past on the basis of the imaging scene.

A more complete understanding of this application can be obtained when the following detailed description is considered in conjunction with the following drawings, in which:
FIG. 1A is a front view showing one example of the outside of an imaging apparatus **1** according to the present invention;
FIG. 1B is a rear view showing one example of the outside of an imaging apparatus **1** according to the present invention;
FIG. 2 is a block diagram showing one example of the schematic composition of the imaging apparatus 1;
FIG. 3 is a flowchart showing one example of the operation of the imaging apparatus 1;
FIG. 4 is a flowchart showing one example of the process for detecting optical flow executed by the imaging apparatus 1;
FIG. 5A is a figure showing one example of the prior image captured by the imaging apparatus **1**;
FIGS. 5B-F are figures showing examples of current frame image captured by the imaging apparatus **1**;
FIGS. 6A-E are figures showing examples of the optical flow the imaging apparatus **1** detects from the captured image; and
FIG. 7 is a table showing one example of the scene when the imaging apparatus **1** captures the image.

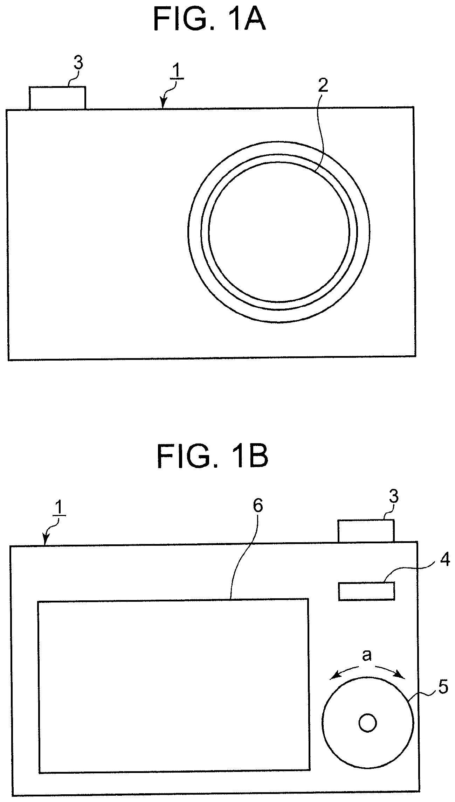

The imaging apparatus according to the preferred embodiment of the present invention will be described hereafter with reference to the drawings. FIG. 1A is a front view of the outside of an imaging apparatus 1 according to this embodiment, and FIG. 1B is a rear view. The imaging apparatus 1 is provided on the front with an imaging lens 2 and on the top with a shutter key 3. This shutter key 3 is equipped with a so-called half-shutter function enabling it to be halfway depressed or fully depressed. In addition, the imaging apparatus 1 is provided on the back surface with a function key 4, a cursor key 5 and a display unit 6. The cursor key 5 functions as a rotary switch rotatable in direction "a" in FIG. 1B. Display unit 6 is composed of an LCD (liquid crystal display) with a 16:9 aspect ratio, for example.

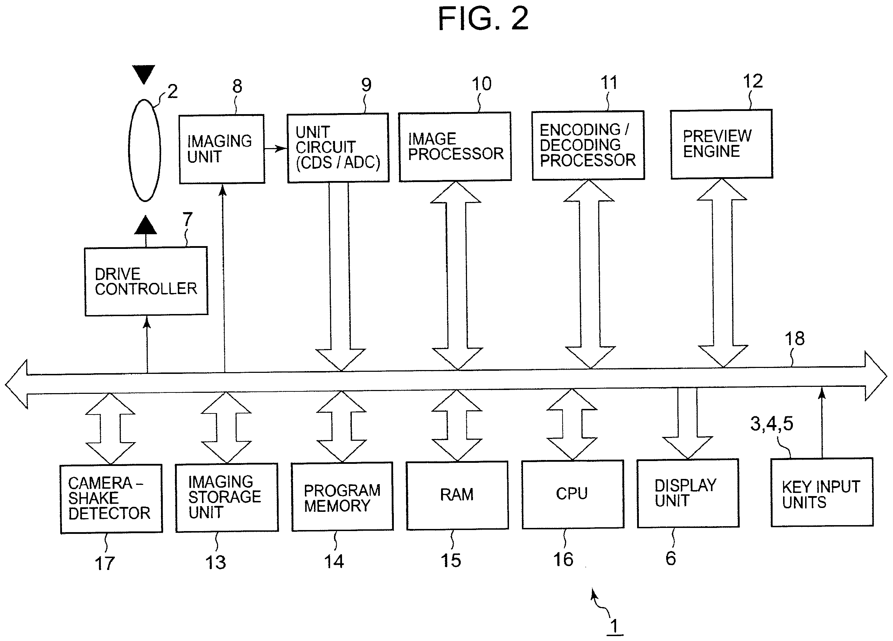

FIG. 2 is a block diagram showing the schematic composition of the imaging apparatus 1. The imaging apparatus 1 is composed of the imaging lens 2, the key input units 3-5, the display unit 6, a drive controller 7, an imaging unit 8, a unit circuit 9, an image processor 10, an encoding/decoding processor 11, a preview engine 12, an image storage unit 13, a program memory 14, RAM (random access memory) 15, a CPU 16, a camera-shake detector 17 and a bus line 18.

The CPU 16 is a one-chip microcomputer that controls the various components of the imaging apparatus 1. The imaging apparatus 1 according to this embodiment detects the subject from inside the image captured by the imaging apparatus 1 and tracks that subject. The CPU 16 controls the various components of the imaging apparatus 1 in order to execute that action.

The imaging lens 2 is a lens unit composed of a plurality of lenses on which are mounted optical system members provided with a zoom lens, a focus lens, etc. The CPU 16, upon detecting the photographer's zoom operation or the photographer's half-pressing of the shutter key 3, accomplishes an auto focus (AF) process and sends control signals to the drive controller 7 to control the drive controller 7. The drive controller 7 causes the position of the imaging lens 2 to move on the basis of those drive signals.

The key input units 3-5 send to the CPU 16 operation signals in accordance with operation of the shutter key 3, the function key 4 and the cursor key 5.

The imaging unit 8 is composed of an imaging sensor such as a CMOS (complementary metal oxide semiconductor) and is positioned on the optical axis of the above-described imaging lens 2.

The unit circuit 9 is a circuit into which an analog imaging signal is input corresponding to the optical image of the subject output from the imaging unit 8. The unit circuit is composed of an automatic gain control (AGC) amplifier that amplifies the imaging signal accompanying the automatic exposure (AE) process and correlated double sampling (CDS) that preserves the input imaging signal. Furthermore, the unit circuit 9 is composed of an analog/digital converter (ADC) that converts the amplified imaging signals into digital imaging signals. The image processor 10 performs various types of image processing on the imaging signals sent from the unit circuit 9.

The imaging signal output from the imaging unit 8 is sent to the image processor 10 as a digital signal after passing through the unit circuit 9. That digital signal (imaging signal) undergoes various types of image processing in the image processor 10. Moreover, the digital signal (imaging signal) on which various types of image processing have been performed is compressed in the preview engine 12 and supplied to the display unit 6. Furthermore, when the supplied digital signal (imaging signal) and the drive control signal that drives the driver built into the display unit 6 are input into the display unit 6, the display unit 6 gives a live-view display of the image based on the digital signal (imaging signal).

An image file is recorded in the image storage unit 13. The image storage unit 13 may be a memory built into the imaging apparatus 1 or may be a removable memory. When recording images, imaging signals processed by the image processor 10 are compressed and encoded by the encoding/decoding processor 11, made into files using a predetermined file format such as JPEG, and recorded on the image storage unit 13. On the other hand, image files read from the image storage unit 13 when playing back images are decoded by the encoding/decoding processor 11 and displayed on the display unit 6.

The preview engine 12 creates images for the above-described preview display. In addition, the preview engine 12 accomplishes the necessary control when an image is displayed on the display unit 6 immediately prior to being recorded on the image storage unit 13 at the time of image recording.

The programs for executing processes shown in the later-described flowcharts are stored in the program memory 14. The RAM 15 temporarily stores continuously captured images. The camera-shake detector 17 detects vibrations caused by shaking of the photographer's hands and sends the detected results to the CPU 16. The bus line 18 connects the various components of the imaging apparatus 1 and transmits data back and forth between these components.

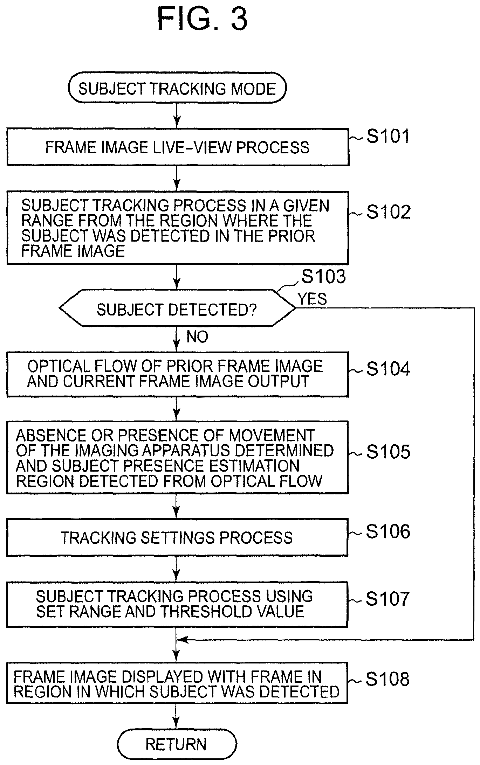

The actions of the imaging apparatus 1 will be described hereafter. When the CPU 16 detects an instruction to start the imaging mode through a predetermined operation of the function key 4 or the cursor key 5, the CPU 16 reads and executes programs relating to the subject tracking mode from the program memory 14 as shown in the flowchart in FIG. 3.

In subject tracking mode, first the imaging unit 8 outputs the analog imaging signal corresponding to the optical image of the whole angle of view to the unit circuit 9 with a predetermined period. Furthermore, the unit circuit 9 converts the input analog imaging signal into a digital signal. The CPU 16 creates image data on the image processor 10 from that digital signal. Furthermore, the CPU 16 displays the created image data on the display unit 6 as live-view (step S101). In the explanation below, the aforementioned predetermined period is called a frame, the image created at this point in time is called the current frame image and the image created one frame prior to the current frame image is called the prior frame image.

When the live-view begins, the CPU 16 executes a subject tracking process (step S102). The subject tracking process includes a process that detects image regions that resemble a template image of the subject detected from the prior frame image above a predetermined threshold value, within a certain range of the region in the current frame image where the prior subject was detected. Furthermore, the subject tracking process includes a process that determines when the subject has moved within that detected image region. Detection of the subject conducted initially is accomplished with respect to the entire region of the frame image (the whole angle of view). Here, the subject is the target of imaging, and is a person, a specific part of a person (face, etc.), an animal, an object, etc.

Next, the CPU 16 determines whether or not the subject has been detected within a given range from the region where the prior subject was detected in step S102 (step S103).

When the CPU 16 determines in step S103 that the subject has been detected (step S103; Y), the CPU 16 advances to step S108. On the other hand, when the CPU 16 determines that the subject has not been detected (step S103; N), the CPU 16 partitions the prior frame image into a plurality of blocks. Next, the CPU 16 outputs optical flow indicating the distribution scene of the frame image as a whole in the flow (flow direction) of the movement vector in each of these blocks (step S104).

The CPU 16 determines the absence or presence of the movement (change in the angle of view) of the imaging apparatus 1 on the basis of the optical flow output in step S104, and detects the subject presence estimation region (the region where it is estimated that there is a high probability that the subject exists) on the basis of the determination results (step S105). Specifically, the CPU 16 detects the change in the angle of view from movement of the background and the four comers of the image in the current frame image on the basis of the optical flow output in step S104. Furthermore, the CPU 16 determines the change in the detected angle of view as being caused by movement of the imaging apparatus. Furthermore, the CPU 16 detects as the subject presence estimation region a region having a flow in a direction differing from the flow accompanying the detected movement of the imaging apparatus 1 in the current frame image.

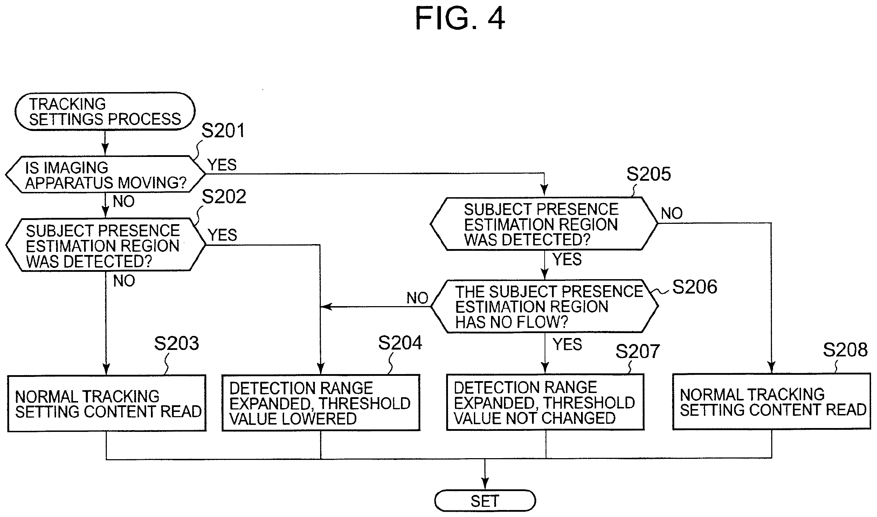

FIG. 4 is a flowchart showing the concrete actions of steps S105 and S106. First, the CPU 16 determines whether or not the imaging apparatus 1 has moved on the basis of having detected the change in the angle of view (step S201).

When it is determined by the CPU 16 that the imaging apparatus 1 has not moved (step S201; No), in other words when the flow of the background and the four comers of the image in the current frame image are not detected, the CPU 16 then determines whether or not the subject presence estimation region was detected (step S202). When the subject presence estimation region was not detected (step S202; No), that is to say when it is determined that a region having a flow corresponding to the subject presence estimation region does not exist in the current frame image, the CPU 16 reads the normal tracking setting contents (step S203) and the tracking setting process ends.

In addition, when the subject presence estimation region was detected (step S202; Yes), in other words, when it is determined that a region exists in the current frame image having a flow corresponding to the subject presence estimation region, the detection range is expanded more than the above-described normal tracking setting contents and tracking setting is accomplished by lowering the detection threshold value (step S204) and the tracking setting process ends. The detection range is the range where matching is accomplished using the template image. This detection range is a region within a predetermined range from the region where the subject region was detected in the prior frame image. In addition, the detection threshold value is a threshold value for determining matching to the template image, and image regions with a degree of matching higher than this value are detected as subject regions. These setting values are predetermined values set in advance and are stored in a predetermined region of the program memory 14.

On the other hand, when it is determined that the imaging apparatus 1 has moved (step S201; Yes), the CPU 16 determines whether or not a region has been detected in which there is no flow accompanying movement of the imaging apparatus 1 from within the current frame image, and when this is detected judges this to be the subject presence estimation region (step S205).

When the CPU 16 determines that a subject presence estimation region has been detected (step S205; Yes), the CPU 16 then determines whether or not that subject presence estimation region has no flow in the subsequent frame images (step S206).

Furthermore, when the CPU 16 determines that the subject presence estimation region has no flow in the subsequent frame images (step S206; Yes), the detection range is expanded, a tracking setting making the detection threshold value normal is accomplished (step S207) and the tracking setting process ends.

On the other hand, when the CPU 16 determines that the subject presence estimation region has flow in the subsequent frame images (step S206; No), the detection range is expanded, tracking setting is accomplished by lowering the detection threshold value (step S204) and the tracking setting process ends.

In addition, when the CPU 16 determines that a subject presence estimation region has not been detected (step S205; No), the normal tracking setting contents are read (step S208) and the tracking setting process ends.

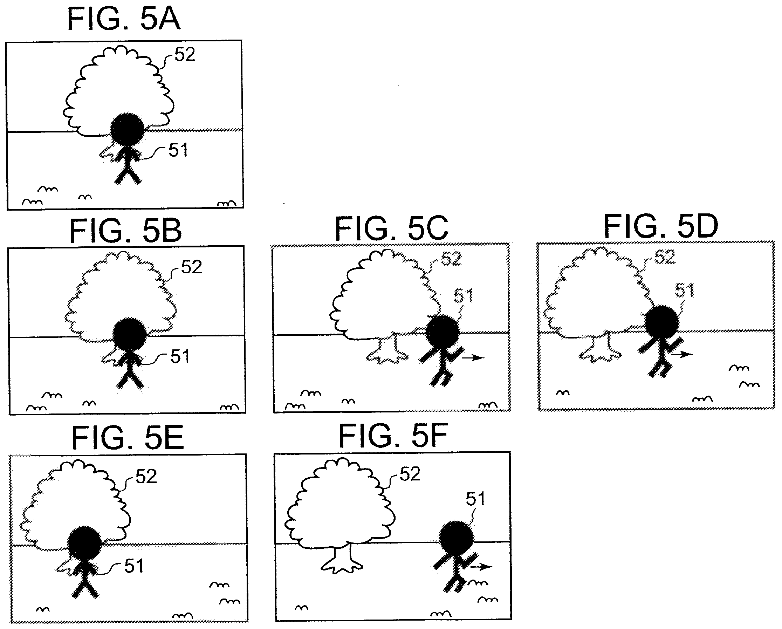

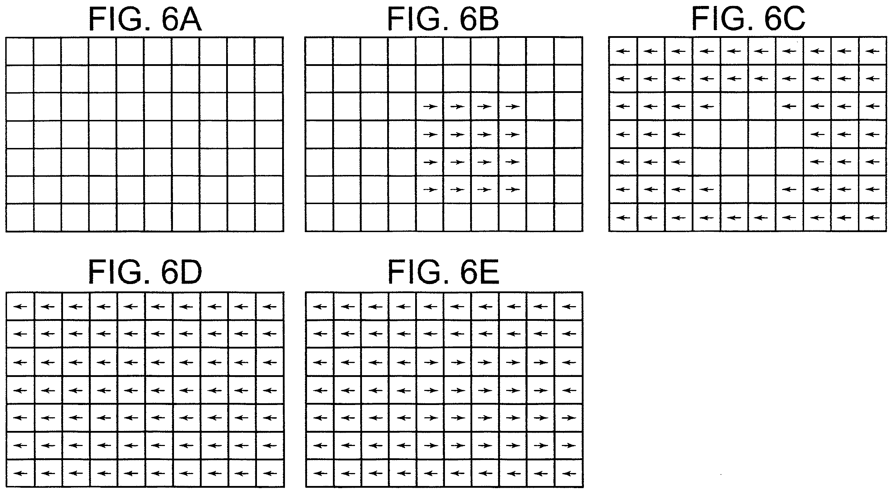

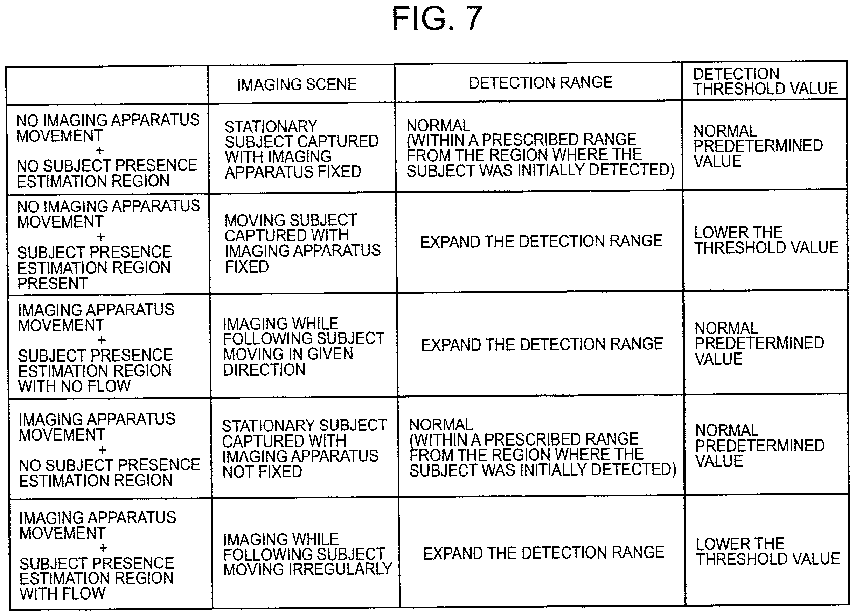

FIG. 5 shows a concrete example of a captured image. FIG. 5A shows the prior frame image. FIGS. 5B-5F show current frame images. In addition, FIG. 6A-6E are drawings showing concrete examples of optical flow output when FIG. 5A changes to FIGS. 5B-5F. In addition, FIG. 7 is a summary of each imaging scene and tracking setting corresponding to the output optical flows.

When the image changes from FIG. 5A to FIG. 5B, there is no movement in the positions of the subject 51 and the tree (background) 52. Hence, the optical flow output is as shown in FIG. 6A. In other words, there is no movement in the imaging apparatus 1, and there is no subject presence estimation region (step S201, No; Step S202, No). In this case, it is considered that the imaging apparatus 1 has captured a stationary subject in a fixed state as indicated by the second row in FIG. 7. Accordingly, the CPU 16 reads and sets the normal tracking setting contents (step S203).

When the image changes from FIG. 5A to FIG. 5C, the subject 51 has moved but position of the tree (background) 52 has not changed. Hence, the output optical flow is as shown in FIG. 6B and the determination is that the imaging apparatus 1 is not moving. In addition, because there is a region in FIG. 6B in which arrows are present, this region is determined to be a region in which flow is present, that is to say a subject presence estimation region (step S201, No; step S202, Yes). In this case, it is considered that this is a scene in which the imaging apparatus 1 has captured a moving subject in a fixed state as indicated by the third row in FIG. 7. Accordingly, the CPU 16 expands the detection region in order to make detection of the subject easier and accomplishes tracking setting lowering the threshold value (step S204).

When the image changes from FIG. 5A to FIG. 5D, there is no movement in the position of the subject 51 but the position of the tree (background) 52 has moved. Accordingly, the output optical flow is as shown in FIG. 6C. In this case, the imaging apparatus 1 is moving but a region with no flow accompanying movement of the imaging apparatus 1 is detected and this region is judged to be a subject presence estimation region (step S201, Yes; step S205, Yes; step S206, Yes). In this case, it is considered that this is a scene in which imaging is accomplished following a subject moving in a fixed direction such as panning, as shown in the fourth row of FIG. 7. Although the direction of the subject in the angle of view does not change in this imaging scene, it is considered that there is a possibility that the position of the subject could shift. Accordingly, the CPU 16 accomplishes tracking setting to expand the detection region with the normal threshold value (step S207).

When the image changes from FIG. 5A to FIG. 5E, the positions of the subject 51 and the tree (background) 52 are moving in the same direction. Hence, the output optical flow is as shown in FIG. 6D. That is to say, the imaging apparatus 1 is moving and it is determined that no subject presence estimation region exists (step S201, Yes; step S205, No). In this case, it is considered that this is in a scene in which the imaging apparatus 1 is capturing an image while moving with no subject present, as shown in fifth row of FIG. 7. Accordingly, the CPU 16 reads and sets the normal tracking setting contents (step S208).

When the image changes from FIG. 5A to FIG. 5F, the subject 51 and the tree (background) 52 are each moving in different directions. Hence, the output optical flow is as shown in FIG. 6E. In this case, because there is flow in a different direction (the region with different arrow direction from the surroundings in FIG. 6E) from the flow corresponding to the detected motion of the imaging apparatus 1, this region is judged to be a subject presence estimation region (step S201, Yes; step S205, Yes; step S206, No). In this case, it is considered that this is a scene in which an irregularly moving subject has not been detected, as shown in sixth row of FIG. 7. Accordingly, the CPU 16 expands the detection range in order to make detection of the subject easier and accomplishes tracking setting by lowering the threshold value (step S204). In this case, the detection range may be broader than the settings for the cases of FIGS. 5C and 5D in order to make detection of the subject even easier.

With the above-described settings, it is possible to detect and track the subject suitably.

When the tracking setting process ends, the CPU 16 returns to FIG. 3 and accomplishes the subject tracking process with the set detection range and detection threshold value (step S107).

Furthermore, in step S108 the CPU 16 sets as the focus region the subject region detected in step S103 or step S107. Furthermore, the CPU 16 accomplishes an imaging preprocess including an auto focus (AF) process, an auto exposure (AE) process and an auto white balance (AWB) process on the set region. Next, the CPU 16 adds a frame to the detected subject region and makes a live-view display of the frame image on the display unit 6. In addition, the image of the detected subject region is updated as the new template image and the above actions are repeated. By repeating in this manner, the CPU 16 successively detects (tracks) to what position the subject is moving for the various frame images successively captured.

With the imaging apparatus 1 according to this embodiment, it is possible to accomplish subject tracking processes suitable for the imaging scenes by detecting changes in the subject and/or angle of view in the captured image.

The above-described embodiment is intended to be illustrative and not limiting, for various variations and applications are possible.

For example, when a plurality of regions are detected as subject presence estimation regions in step S105 of FIG. 3, the CPU 16 may determine as the subject presence estimation region a region within the region in which the subject was detected in the prior frame image or a region close to that region.

In addition, when the subject cannot be tracked with the subject tracking process in step S107 of FIG. 3, the CPU 16 may lower the detection threshold value in the subject presence estimation region detected in step S105 and then accomplish the subject tracking process again.

In addition, the above-described optical flow may be output by the CPU 16 taking into consideration movement vectors originating from camera-shakes. That is to say, the CPU 16 may detect movement of the imaging apparatus on the basis of optical flow output by subtracting movement vectors originating from camera-shakes detected by the camera-shake detector 17 from the output optical flow.

In addition, the program executed by the CPU 16 in the imaging apparatus 1 was explained as prerecorded in the program memory 14, but this may be acquired from an external storage medium or may be one stored after being transmitted over a network.

## Claims

1. An imaging apparatus comprising:
an imaging unit (8) for successively capturing images of a subject in a live-view;
a change detection unit (16) for detecting a change between the images successively captured by the imaging unit;
an angle of view change determination unit for determining a direction of change of an angle of view between the images on the basis of the change between the images detected by the change detection unit;
a subject detection unit for detecting a region as the subject region corresponding to a subject, on the basis of a difference between the change of angle of view between the images determined by the angle of view change determination unit and the change between the images detected by the change detection unit; a determination unit (16) for determining a moving state of the subject and a moving state of the imaging unit that captures the image of the subject in the moving state on the basis of the change in the angle of view between the images and the change between images detected by the change detection unit;
a specification unit for specifying as the subject region corresponding to a subject that should be tracked an image region matching above a predetermined threshold value a template image detected from the image captured by the imaging unit in advance; and
a control unit (16) for controlling tracking of the subject region included in the image captured by the imaging unit on the basis of determination results from the determination unit by
changing a range where the subject region should be tracked in the image and by changing the predetermined threshold value on the basis of the determination results from the determination unit.

2. The imaging apparatus according to claim 1, **characterized in that** the control unit is configured to change the predetermined threshold value to a value lower than the threshold value set immediately prior on the basis of the determination results from the determination unit.

3. The imaging apparatus according to claim 1, **characterized in that**:
the angle of view determination unit is configured to determine an amount of change in an angle of view between the images on the basis of the change between the images detected by the change detection unit; and
the subject detection unit is configured to detect as the subject region a region having an amount of change differing from the amount of the change thus determined.

4. The imaging apparatus according to claim 1, **characterized in that** the subject detection unit is configured to determine whether or not a plurality of regions have been detected as subject regions, and when a plurality of regions have been detected, to detect as the subject region that should be tracked a subject region detected in the region closest to the most recently tracked subject region out of that plurality of regions.

5. The imaging apparatus according to claim 1, **characterized by** further comprising:
an output unit for outputting a vector distribution of movement vectors between the images successively captured by the imaging unit;
wherein the change detection unit is configured to detect the change between the images on the basis of the vector distribution output by the output unit; and
the subject detection unit is configured to detect the subject region on the basis of the change between images detected by the change detection unit and the vector distribution output by the output unit.

6. The imaging apparatus according to claim 5, **characterized in that** the output unit is configured to output the vector distribution by subtracting movement vectors caused by camera-shakes from the movement vector between the successively captured images.

7. A subject tracking method comprising:
an imaging step (S101) that successively captures images of a subject in a live-view;
a change detection step (S104) that detects a change between the images successively captured in the imaging step;
an angle of view change determination step that determines a change of angle of view between the images based on the change between the images detected in the change detection step;
a subject detection step that detects a region as a subject region corresponding to the subject, on the basis of a difference between the change of angle of view between the images determined in the angle of view change determination step and the change between
the images detected in the change detection step; a determination step (S105) that determines a moving state of the subject and a moving state of the imaging unit that captures the image of the subject in the moving state, on the basis of the change in the angle of view between the images and the change between the images detected in the change detection step;
specifying as the subject region corresponding to a subject that should be tracked an image region matching above a predetermined threshold value a template image detected from the image captured by the imaging unit in advance; and
a control step (S106) that controls tracking (S107) of a subject region included in the image captured by the imaging unit on the basis of determination results from the determination step by changing a range where the subject region should be tracked in the image and by changing the predetermined threshold value on the basis of the results from the determination step.

## Patentansprüche

1. Bilderzeugungsvorrichtung, die umfasst:
eine Bilderzeugungs-Einheit (8), mit der nacheinander Bilder eines Objektes in Live-View aufgenommen werden;
eine Erfassungs-Einheit (16) für Veränderung, mit der eine Veränderung zwischen den nacheinander mit der Bilderzeugungs-Einheit aufgenommenen Bildern erfasst wird;
eine Feststellungs-Einheit für Änderung des Blickwinkels, mit der eine Richtung von Änderung eines Blickwinkels zwischen den Bildern auf Basis der mit der Erfassungs-Einheit für Veränderung erfassten Veränderung zwischen den Bildern festgestellt wird;
eine Objekt-Erfassungs-Einheit, mit der auf Basis eines Unterschiedes zwischen der mit der Feststellungs-Einheit für Änderung des Blickwinkels festgestellten Änderung des Blickwinkels zwischen den Bildern und der mit der Erfassungs-Einheit für Veränderung erfassten Veränderung zwischen den Bildern ein Bereich als der Objekt-Bereich erfasst wird, der einem Objekt entspricht;
eine Feststellungs-Einheit (16), mit der ein Bewegungs-Zustand des Objektes und ein Bewegungs-Zustand der Bilderzeugungs-Einheit, die das Bild des Objektes in dem Bewegungs-Zustand aufnimmt, auf Basis der Änderung des Blickwinkels zwischen den Bildern und der mit der Einheit zur Erfassung von Veränderung erfassten Veränderung zwischen den Bildern festgestellt wird;
eine Bestimmungs-Einheit, mit der im Voraus als der Objekt-Bereich, der einem Objekt entspricht, das verfolgt werden sollte, ein Bild-Bereich bestimmt wird, der einem aus dem mit der Bilderzeugungs-Einheit aufgenommenen Bild erfassten Vorlagen-Bild oberhalb eines vorgegebenen Schwellenwertes entspricht; und
eine Steuerungs-Einheit (16), mit der Verfolgung des Objekt-Bereiches, der in dem mit der Bilderzeugungs-Einheit aufgenommenen Bild enthalten ist, auf Basis von Feststellungs-Ergebnissen von der Feststellungs-Einheit gesteuert wird, indem ein Gebiet, in dem der Objekt-Bereich verfolgt werden sollte, in dem Bild geändert wird, und indem der vorgegebene Schwellenwert auf Basis der Feststellungs-Ergebnisse von der Feststellungs-Einheit geändert wird.

2. Bilderzeugungsvorrichtung nach Anspruch 1, **dadurch gekennzeichnet, dass** die Steuerungs-Einheit so konfiguriert ist, dass sie auf Basis der Feststellungs-Ergebnisse von der Feststellungs-Einheit den vorgegebenen Schwellenwert auf einen Wert ändert, der niedriger ist als der unmittelbar zuvor eingestellte Schwellenwert.

3. Bilderzeugungsvorrichtung nach Anspruch 1, **dadurch gekennzeichnet, dass**:
die Blickwinkel-Feststellungs-Einheit so konfiguriert ist, dass sie ein Maß der Änderung eines Blickwinkels zwischen den Bildern auf Basis der mit der Einheit zur Erfassung von Veränderung erfassten Veränderung zwischen den Bildern feststellt; und
die Objekt-Erfassungs-Einheit so konfiguriert ist, dass sie als den Objekt-Bereich einen Bereich erfasst, der ein Maß der Änderung aufweist, das sich von dem so festgestellten Maß der Änderung unterscheidet.

4. Bilderzeugungsvorrichtung nach Anspruch 1, **dadurch gekennzeichnet, dass** die Objekt-Erfassungs-Einheit so konfiguriert ist, dass sie feststellt, ob eine Vielzahl von Bereichen als Objekt-Bereiche erfasst worden sind oder nicht, und, wenn eine Vielzahl von Bereichen erfasst worden ist, als den Objekt-Bereich, der verfolgt werden sollte, einen Objekt-Bereich erfasst, der in dem Bereich erfasst wird, der sich von dieser Vielzahl von Bereichen am nächsten an dem aktuell verfolgten Objekt-Bereich befindet.

5. Bilderzeugungsvorrichtung nach Anspruch 1, **dadurch gekennzeichnet, dass** sie des Weiteren umfasst:
eine Ausgabe-Einheit zum Ausgeben einer Vektor-Verteilung von Bewegungs-Vektoren zwischen den nacheinander mit der Bilderzeugungs-Einheit aufgenommenen Bildern;
wobei die Einheit zur Erfassung von Veränderung so konfiguriert ist, dass sie die Veränderung zwischen den Bildern auf Basis der von der Ausgabe-Einheit ausgegebenen Vektor-Verteilung erfasst; und
die Objekt-Erfassungs-Einheit so konfiguriert ist, dass sie den Objekt-Bereich auf Basis der mit der Einheit zur Erfassung von Veränderung erfassten Veränderung zwischen Bildern und der von der Ausgabe-Einheit ausgegebenen Vektor-Verteilung erfasst.

6. Bilderzeugungsvorrichtung nach Anspruch 5, **dadurch gekennzeichnet, dass** die Ausgabe-Einheit so konfiguriert ist, dass sie die Vektor-Verteilung ausgibt, indem sie durch Verwacklungen der Kamera verursachte Bewegungs-Vektoren von dem Bewegungs-Vektor zwischen den nacheinander aufgenommenen Bildern subtrahiert.

7. Verfahren zum Verfolgen eines Objektes, das umfasst:
einen Bilderzeugungs-Schritt (S101), mit dem nacheinander Bilder eines Objektes in Live-View aufgenommen werden;
einen Schritt (S104) zur Erfassung von Veränderung, mit dem eine Veränderung zwischen den nacheinander mit der Bilderzeugungs-Einheit aufgenommenen Bildern erfasst wird;
einen Schritt zur Feststellung von Änderung des Blickwinkels, mit dem eine Änderung eines Blickwinkels zwischen den Bildern auf Basis der mit dem Schritt zur Erfassung von Veränderung erfassten Veränderung zwischen den Bildern festgestellt wird;
einen Schritt zur Erfassung eines Objektes, mit dem auf Basis eines Unterschiedes zwischen der in dem Schritt zur Feststellung von Änderung des Blickwinkels festgestellten Änderung des Blickwinkels zwischen den Bildern und der in dem Schritt zur Erfassung von Veränderung erfassten Veränderung zwischen den Bildern ein Bereich als der Objekt-Bereich erfasst wird, der dem Objekt entspricht;
einen Feststellungs-Schritt (S105), mit dem ein Bewegungs-Zustand des Objektes und
ein Bewegungs-Zustand der Bilderzeugungs-Einheit, die das Bild des Objektes in dem Bewegungs-Zustand aufnimmt, auf Basis der Änderung des Blickwinkels zwischen den Bildern und der in dem Schritt zur Erfassung von Veränderung erfassten Veränderung zwischen den Bildern festgestellt wird;
wobei als der Objekt-Bereich, der einem Objekt entspricht, das verfolgt werden sollte, im Voraus ein Bild-Bereich bestimmt wird, der einem aus dem mit der Bilderzeugungs-Einheit aufgenommenen Bild erfassten Vorlagen-Bild oberhalb eines vorgegebenen Schwellenwertes entspricht; und
einen Steuer-Schritt (S106), mit dem Verfolgung (S107) eines Objekt-Bereiches, der in dem mit der Bilderzeugungs-Einheit aufgenommenen Bild enthalten ist, auf Basis von Feststellungs-Ergebnissen von dem Feststellungs-Schritt gesteuert wird, indem ein Gebiet, in dem der Objekt-Bereich verfolgt werden sollte, in dem Bild geändert wird, und indem der vorgegebene Schwellenwert auf Basis der Ergebnisse von dem Feststellungs-Schritt geändert wird.

## Revendications

1. Appareil d'imagerie comprenant :
une unité d'imagerie (8) pour capturer successivement des images d'un sujet dans une visualisation sur écran en temps réel ;
une unité de détection de changement (16) pour détecter un changement entre les images capturées successivement par l'unité d'imagerie ;
une unité de détermination de changement d'angle de vision pour déterminer une direction de changement d'un angle de vision entre les images sur base du changement entre les images détecté par l'unité de détection de changement ;
une unité de détection de sujet pour détecter une région comme région de sujet correspondant à un sujet, sur base d'une différence entre le changement d'angle de vision entre les images déterminé par l'unité de détermination de changement d'angle de vision et le changement entre les images détecté par l'unité de détection de changement ;
une unité de détermination (16) pour déterminer un état de mouvement du sujet et un état de mouvement de l'unité d'imagerie qui capture l'image du sujet dans l'état de mouvement sur base du changement de l'angle de vision entre les images et du changement entre des images détecté par l'unité de détection de changement ;
une unité de spécification pour spécifier, comme région de sujet correspondant à un sujet qui doit être suivi, une région d'image qui est en correspondance, au-delà d'une valeur seuil prédéterminée, avec une image modèle détectée à partir de l'image capturée à l'avance par l'unité d'imagerie ; et
une unité de contrôle (16) pour contrôler le suivi de la région de sujet incluse dans l'image capturée par l'unité d'imagerie sur base de résultats de détermination provenant de l'unité de détermination en changeant une plage où la région de sujet doit être suivie dans l'image et en changeant la valeur seuil prédéterminée sur base des résultats de détermination provenant de l'unité de détermination.

2. Appareil d'imagerie selon la revendication 1, **caractérisé en ce que** l'unité de contrôle est configurée pour changer la valeur seuil prédéterminée à une valeur inférieure à la valeur seuil établie immédiatement avant sur base des résultats de détermination provenant de l'unité de détermination.

3. Appareil d'imagerie selon la revendication 1, **caractérisé en ce que** :
l'unité de détermination d'angle de vision est configurée pour déterminer une quantité de changement dans un angle de vision entre les images sur base du changement entre les images détecté par l'unité de détection de changement ; et
l'unité de détection de sujet est configurée pour détecter comme région de sujet une région ayant une quantité de changement qui diffère de la quantité du changement ainsi déterminé.

4. Appareil d'imagerie selon la revendication 1, **caractérisé en ce que** l'unité de détection de sujet est configurée pour déterminer si plusieurs régions ont ou non été détectées comme régions de sujet, et quand plusieurs régions ont été détectées, pour détecter comme région de sujet qui doit être suivie une région de sujet détectée dans la région la plus proche de la région de sujet suivie la plus récente parmi cette pluralité de régions.

5. Appareil d'imagerie selon la revendication 1, **caractérisé en ce qu'**il comprend en outre :
une unité de sortie pour sortir une distribution vectorielle de vecteurs de mouvement entre les images successivement capturées par l'unité d'imagerie ;
dans lequel l'unité de détection de changement est configurée pour détecter le changement entre les images sur base de la sortie de distribution vectorielle par l'unité de sortie ; et
l'unité de détection de sujet est configurée pour détecter la région de sujet sur base du changement entre des images détecté par l'unité de détection de changement et la distribution vectorielle sortie par l'unité de sortie.

6. Appareil d'imagerie selon la revendication 5, **caractérisé en ce que** l'unité de sortie est configurée pour sortir la distribution vectorielle en soustrayant des vecteurs de mouvements provoqués par des secousses de l'appareil photo du vecteur de mouvement entre les images capturées successivement.

7. Procédé de suivi de sujet comprenant :
une étape d'imagerie (S101) qui capture successivement des images d'un sujet dans une visualisation sur écran en temps réel ;
une étape de détection de changement (S104) qui détecte un changement entre les images capturées successivement à l'étape d'imagerie ;
une étape de détermination de changement d'angle de vision qui détermine un changement d'angle de vision entre les images sur base du changement entre les images détecté à l'étape de détection de changement ;
une étape de détection de sujet qui détecte une région comme région de sujet correspondant au sujet, sur base d'une différence entre le changement d'angle de vision entre les images déterminé à l'étape de détermination de changement d'angle de vision et le changement entre les images détecté à l'étape de détection de changement ;
une étape de détermination (S105) qui détermine un état de mouvement du sujet et un état de mouvement de l'unité d'imagerie qui capture l'image du sujet dans l'état de mouvement, sur base du changement de l'angle de vision entre les images et du changement entre les images détecté à l'étape de détection de changement ;
la spécification, comme région de sujet correspondant à un sujet qui doit être suivi, d'une région d'image qui est en correspondance, au-delà d'une valeur seuil prédéterminée, avec une image modèle détectée à partir de l'image capturée à l'avance par l'unité d'imagerie ; et
une étape de contrôle (S106) qui contrôle le suivi (S107) d'une région de sujet incluse dans l'image capturée par l'unité d'imagerie sur base de résultats de détermination provenant de l'étape de détermination en changeant une plage où la région de sujet doit être suivie dans l'image et en changeant la valeur seuil prédéterminée sur base des résultats de l'étape de détermination.
